# EUROPÄISCHE PATENTANMELDUNG

(11) **EP 4 772 566 A1**
(43) Veröffentlichungstag der Anmeldung: **08.07.2026**
(21) Anmeldenummer: 25150041.9
(22) Anmeldetag: 02.01.2025
(51) Int. Cl.: C08K 3/26, C08K 3/30, C08K 3/32, B32B 25/00, C09D 5/34, C09J 133/02

(54) **DICHTSTOFF UND SEINE ANWENDUNG**

(71) Anmelder: EWALD DÖRKEN AG, 58313 Herdecke (DE)
(72) Erfinder: ROTH, Marcel, 58313 Herdecke (DE); MIRI, Daniel, 42327 Wuppertal (DE); LISCHEID, Jan, 58313 Herdecke (DE)
(74) Vertreter: Freiherr von Foullon, Alexander

(57) **Zusammenfassung**

Die Erfindung betrifft einen Dichtstoff, ein Verfahren zu seiner Herstellung und seine Verwendung.

## Beschreibung

Die vorliegende Erfindung betrifft das technische Gebiet der Dichtstoffe.

Insbesondere betrifft die vorliegende Erfindung einen Dichtstoff zur Abdichtung von Fugen, insbesondere in Mauerwerk sowie im Sanitärbereich.

Dichtstoffe werden allgemein zur Abdichtung bzw. Versiegelung von Materialübergängen bzw. Bauteilübergängen gegenüber flüssigem Wasser und insbesondere zur Abdichtung bzw. Versiegelung von Fugen in Bereichen mit hoher Feuchtigkeit, wie beispielsweise im Außenbereich oder im Sanitärbereich, eingesetzt. Die Dichtstoffe schützen die unterliegende Konstruktion vor dem Eindringen von Wasser und den damit verbundenen Schäden sowohl durch die Feuchtigkeit als solche als auch durch Pilze, insbesondere Schimmelpilze, welche außerdem zu Gesundheitsproblemen führen können.

Darüber hinaus werden Dichtstoffe auch zur dauerelastischen Verbindung von Baustoffen, insbesondere unterschiedlichen Baustoffen, sowie als Ausgleichsmassen zur Schaffung ebener und ansprechender Oberflächen eingesetzt.

Von besonderer Bedeutung sind insbesondere silikonbasierte Dichtstoffe und acrylatbasierte Dichtstoffe.

Silikon- und Acryldichtmassen können in zahlreichen technischen Gebieten zur Anwendung kommen, insbesondere zur Abdichtung und zur Verbindung. Ihr Einsatzgebiet erstreckt sich von Bau- und Konstruktionsprojekten bis hin zu Automobil- und Elektronikanwendungen. Die äußerst vielseitigen Materialien bieten eine ausgezeichnete Haftung auf verschiedenen Oberflächen, sind äußerst flexibel und beständig gegenüber Witterungseinflüssen.

Silikondichtmassen werden vor allem in Bau- und Sanitärinstallationen eingesetzt, um Fugen abzudichten. Sie finden beispielsweise Anwendung zwischen Fliesen, Waschbecken und Wänden. Silikondichtmassen sind die ideale Wahl für feuchte Umgebungen, wie Badezimmer und Küchen, sowie in der Elektronikindustrie, um elektrische Komponenten vor Feuchtigkeit zu schützen und zu isolieren.

Da Silikondichtmassen oftmals in dauerhaft feuchten Bereichen eingesetzt werden, werden sie von Schimmelpilzen angegriffen und müssen diesen gegenüber eine hohe Widerstandsfähigkeit aufweisen. Ein entscheidendes Kriterium bei der Auswahl von Silikondichtmassen ist daher die Fähigkeit, Schimmelbildung zu verhindern, d.h einerseits die Fugen abzudichten andererseits nicht von Schimmel befallen zu werden.

Eine Resistenz gegenüber der Bildung von Schimmel wird durch die Zugabe von Bioziden erreicht, chemischen Verbindungen, die das Wachstum von Schimmel und anderen Mikroorganismen hemmen. Die Biozide in Silikondichtmassen reduzieren den Nährstoffgehalt für Schimmel und hemmen so seine Vermehrung. Hierdurch bleiben die versiegelten Oberflächen länger frei von Schimmel und unangenehmen Gerüchen.

Um die Sicherheit von Mensch und Umwelt zu gewährleisten, ist es unerlässlich, dass die verwendeten Biozide umweltverträglich und gesundheitlich unbedenklich sind. Silikondichtmassen mit Biozid-Ausstattung bieten eine äußerst effektive Lösung zur Prävention von Schimmelbildung in verschiedenen Anwendungen. Die Vielseitigkeit, Haftung und Schutzeigenschaften von Silikonen machen dieses Material zu einem unverzichtbaren Bestandteil in Bereichen, in denen Dichtigkeit und Hygiene von entscheidender Bedeutung sind.

Die Schimmelbildung in Dichtstoffen tritt aufgrund der organischen Bestandteile der Materialien auf. Sowohl Silikondichtmassen als auch acrylatbasierte Dichtmassen enthalten organische Bestandteile, die ein ideales Nährmedium für Schimmel und andere Mikroorganismen darstellen, insbesondere in feuchter Umgebung. Feuchtigkeit und Luftfeuchtigkeit können in Badezimmern, Küchen und anderen feuchten Bereichen dazu führen, dass die organischen Komponenten Feuchtigkeit absorbieren und so ein optimales Umfeld für das Wachstum von Schimmel schaffen. Die organischen Bestandteile in den Dichtmassen können auch durch Mikroorganismen abgebaut werden, was zu einer weiteren Förderung des Schimmelwachstums führt. Dieser Abbau kann zu einer Zersetzung der Dichtmasse führen und die Integrität der Abdichtung beeinträchtigen, was letztendlich zu einem erhöhten Risiko für Feuchtigkeitseintritt und Schäden an den versiegelten Oberflächen führt.

Insbesondere folgende Mikroorganismen können sich in Dichtmassen vermehren:
Schimmelpilze (Fungi):
   - Aspergillus spp.
   - Penicillium spp.
   - Cladosporium spp.
   - Alternaria spp.
Bakterien:
   - Pseudomonas aeruginosa
   - Staphylococcus aureus
   - Escherichia coli
   - Bacillus spp.
Hefen (Fungi):
   - Candida albicans
   - Saccharomyces cerevisiae
   - Cryptococcus spp.
   - Rhodotorula spp.

Diese vorgenannten Arten stellen nur einen Teil der in bzw. auf Dichtstoffen vorkommenden Mikroorganismen dar; sie können in verschiedenen Kombinationen und Konzentrationen in Dichtmassen vorkommen, abhängig von den Umweltbedingungen und der Zusammensetzung der Materialien. Die Kontrolle ihres Wachstums ist entscheidend, um die Hygiene und Langlebigkeit der versiegelten Oberflächen zu gewährleisten.

Um Dichtstoffe vor Schimmelbildung zu schützen, werden standardmäßig Biozide, insbesondere Fungizide, eingesetzt. Die Biozide bzw. Fungizide werden den Dichtstoffen als Additive zugegeben. Biozide bzw. Fungizide haben den Nachteil, dass sie oftmals relativ flüchtige Verbindungen sind und im Laufe der Zeit aus den Dichtstoffen entweichen, insbesondere auch an die Umgebungsluft abgegeben werden.

Biozide besitzen oftmals nachteilige gesundheitliche Auswirkungen, stehen im Verdacht, Allergien auszulösen und beeinflussen auch nützliche Mikroorganismen nachteilig.

Silikon- und Acryldichtmassen mit Biozid-Ausstattung sind zwar äußerst wirksam bei der Verhinderung von Schimmelbildung, stellen jedoch potenzielle Gefahren für Mensch und Umwelt dar.

Silikondichtmassen mit Biozid-Ausstattung sind allerdings nach dem Stand der Technik eine der besten Optionen, um Schimmelbildung zu verhindern.

Biozide sind, wie zuvor ausgeführt, chemische Verbindungen, die das Wachstum von Mikroorganismen hemmen oder Mikroorganismen töten. Obwohl sie Schimmel effektiv bekämpfen können, bergen sie auch Risiken. Biozide haben gesundheitliche Auswirkungen auf den Menschen, insbesondere bei längerer oder hochdosierter Exposition. Hautreizungen, Allergien oder sogar schwerwiegendere gesundheitliche Probleme können durch einige Biozide verursacht werden. Es ist wichtig, Biozide sachgemäß zu handhaben, um versehentliche Exposition zu vermeiden, sei es durch Hautkontakt, Einatmen von Dämpfen oder Verschlucken.

Biozide haben negative Auswirkungen auf die Umwelt und sollten daher nicht freigesetzt werden. Durch das Abwaschen von behandelten Oberflächen gelangen Biozide jedoch beispielsweise in das Abwasser und können in Gewässern schädliche Auswirkungen auf aquatische Lebensformen haben. Bestimmte Biozide können sich in der Umwelt anreichern und Ökosysteme stören. Silikondichtmassen mit Biozid-Ausstattung sind daher mit Vorsicht einzusetzen.

Der Einsatz von Bioziden umfasst unter anderem:
Quaternäre Ammoniumverbindungen:
   - Dodecylbenzyltrimethylammoniumchlorid (DABAC)
   - Benzalkoniumchlorid (BAC)
   - Cetyltrimethylammoniumbromid (CTAB)
Isothiazolinone:
   - Methylisothiazolinon (MIT)
   - Chloromethylisothiazolinon (CMIT)
   - Octylisothiazolinon (OIT)
Phenole:
   - p-Chlor-m-cresol (PCMC)
   - 2,4,4'-Trichlor-2'-hydroxydiphenylether (Triclosan)
Organische Säuren:
   - Propionsäure
   - Essigsäure
   - Benzoesäure
Halogene:
   - Chlor (in Form von Natriumhypochlorit oder Dichlordiphenyltrichlorethan)
   - Brom

Diese Biozide können einzeln oder in Kombination verwendet werden, um ein breites Spektrum an Mikroorganismen zu bekämpfen und das Wachstum von Schimmel, Bakterien und Hefen in Dichtstoffen zu kontrollieren.

Die vorgenannten Biozide besitzen allesamt den Nachteil, dass ihr Einsatz unter den Gesichtspunkt des Umwelt- und Gesundheitsschutzes problematisch ist und nach Möglichkeit vermieden werden sollte. Darüber hinaus wird die Verwendung von Bioziden zunehmend durch gesetzgeberische Maßnahmen stärker reguliert und eingeschränkt.

Folglich wird verstärkt nach alternative Lösungen zu Dichtstoffen, insbesondere Silikondichtmassen, mit Biozid-Ausstattung gesucht, die weniger potenzielle Gefahren für Mensch und Umwelt darstellen. Diese Lösungen müssen jedoch weiterhin eine schimmelhemmende Wirkung aufweisen, um saubere und hygienische Oberflächen zu gewährleisten.

Es fehlt im Stand der Technik jedoch weiterhin an einem biozidfreien bzw. biozidarmen Dichtstoff, welcher hervorragende Widerstandsfähigkeit gegenüber einer Besiedlung mit Schimmelpilzen aufweist.

Eine Aufgabe der vorliegenden Erfindung ist somit darin zu sehen, die zuvor genannten, mit dem Stand der Technik verbunden Nachteile zu vermeiden, zumindest jedoch abzuschwächen.

Insbesondere ist eine Aufgabe der vorliegenden Erfindung, einen biozidfreien bzw. -armen Dichtstoff bereitzustellen, welcher eine hohe Resistenz gegenüber Schimmelpilzen und anderen Mikroorganismen aufweist und sich in hervorragender Weise für Anwendungen im Außen- und Sanitärbereich eignet.

Die zuvor gestellte Aufgabe wird erfindungsgemäß gemäß einem ersten Aspekt der vorliegenden Erfindung durch einen Dichtstoff gemäß Anspruch 1 gelöst; weitere, vorteilhafte Ausgestaltungen dieses Erfindungsaspekts sind Gegenstand der diesbezüglichen Unteransprüche.

Weiterer Gegenstand der vorliegenden Erfindung gemäß einem zweiten Aspekt der vorliegenden Erfindung ist die Verwendung eines Dichtstoffs nach Anspruch 16.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass dies einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich auch von selbst, dass gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden - gemäß einem **ersten** Aspekt der vorliegenden Erfindung - ist somit ein Dichtstoff, wobei der Dichtstoff einen aluminiumhaltigen Füllstoff und ein Bindemittel aufweist.

Denn, wie die Anmelderin überraschenderweise herausgefunden hat, lassen sich schimmelpilzresistente bzw. -hemmende Dichtstoffe bzw. Dichtmassen erhalten, wenn dem Dichtstoff bzw. der Dichtmasse ein aluminiumhaltiger Füllstoff zugesetzt ist. Aluminiumhaltige Füllstoffe, insbesondere calcium- und aluminiumhaltige Füllstoffe, weisen oftmals hervorragende biostatische, insbesondere fungistatische, Eigenschaften auf, stellen jedoch keine klassischen Biozide dar, deren Einsatz vermieden werden sollte, dar. Aluminiumhaltige Füllstoffe sind vielmehr gesundheitlich unbedenklich und umweltverträglich.

Aluminiumhaltige Füllstoffe, insbesondere Calcium und Aluminium enthaltende Füllstoffe, können Dichtstoffen in großen Anteilen zugesetzt werden, ohne dass die Verarbeitungseigenschaften oder die Produkteigenschaften der Dichtstoffe herabgesetzt bzw. verschlechtert sind.

Darüber hinaus werden aluminiumhaltige Füllstoffe im Gegensatz zu üblichen Bioziden bzw. Fungiziden nicht in nennenswertem Umfang aus den Dichtstoffen herausgelöst und sind nicht flüchtig und gelangen folglich nicht in die Umwelt oder gar die Umgebungsluft. Ein besonderer Vorteil der aluminiumhaltigen Füllstoffe ist, dass sie anstelle üblicherweise verwendeter Füllstoffe und Pigmente eingesetzt werden können bzw. zumindest einen Teil der üblicherweise eingesetzten Pigmente und Füllstoffe in Dichtstoffen ersetzen können.

Der erfindungsgemäße Dichtstoff liegt insbesondere in hochviskoser oder bzw. pastöser Form vor. Vorzugsweise bilden die erfindungsgemäßen Dichtstoffe nach dem Trocknen oder Aushärten dauerelastische Materialien.

Unter einem Dichtstoff ist im Rahmen der vorliegenden Erfindung insbesondere ein Werkstoff, der zumeist pastös und aushärtend ist, zum Abdichten von Fugen, Spalten, Löcher und dergleichen, die Bewegung ausgesetzt sein können, zu verstehen. Dichtstoffe zeichnen sich vorzugsweise insbesondere dadurch aus, dass sie an den Fugenflanken haften. Darüber hinaus können Dichtstoffe aber auch zur flächigen Abdichtung von Bauteiloberflächen eingesetzt werden.

Im Rahmen vorliegenden Erfindung des üblicherweise vorgesehen, dass der Dichtstoff ein reaktiver Dichtstoff ist. Reaktive Dichtstoffe sind Dichtstoffe deren chemische und/oder physikalische Eigenschaften sich während des Trocknungs-oder Aushärtevorgangs ändern. Nicht-reaktive Dichtstoffe bleiben in ihren Eigenschaften hingegen unverändert. Nicht-reaktive Dichtstoffe sind beispielsweise Öle und Fette.

Vorzugsweise ist der Dichtstoff ausgewählt aus der Gruppe von chemisch reaktiven Dichtstoffen und physikalisch reaktiven Dichtstoffen sowie deren Mischungen. Unter einem chemisch reaktiven Dichtstoff ist im Rahmen der vorliegenden Erfindung ein Dichtstoff zu verstehen, welcher durch chemische Reaktion, insbesondere Vernetzung, aushärtet. Unter einem physikalisch reaktiven Dichtstoff sind insbesondere lösemittelhaltige und/oder wässrige Bindemittelsysteme zu verstehen, welche durch Entfernung des Lösemittels bzw. Wassers aushärten bzw. trocknen.

Vorzugsweise handelt es sich bei erfindungsmäßen Dichtstoff um eine Dichtmasse oder einen Fugendichtstoff.

Im Rahmen der vorliegenden Erfindung ist der aluminiumhaltige Füllstoff üblicherweise ausgewählt aus der Gruppe von Magnesiumaluminiumphosphaten, Magnesiumaluminiumsilikaten, Calciumaluminiumphosphaten, Calciumaluminiumsilikaten, Calciumaluminat-Hydraten, Calciumaluminatsulfat und deren Mischungen.

Besonders gute Ergebnisse werden im Rahmen der vorliegenden Erfindung erhalten, wenn der aluminiumhaltige Füllstoff ausgewählt ist aus Calciumaluminat-Hydraten, Calciumaluminatsulfat und deren Mischungen.

Besonders gute Ergebnisse werden in diesem Zusammenhang erhalten, wenn der aluminiumhaltige Füllstoff ausgewählt ist aus der Gruppe von Tricalciumaluminat-Hydrat [3 CaO * Al₂O₃ * 6 H₂O bzw. Ca₃Al₂(OH)₁₂], Tetracalciumaluminat-Hydrat [4 CaO * Al₂O₃ * 7 H₂O bzw. Ca₄Al₂(OH)₁₄], Calciumaluminatsulfat [Ettringit, 3 CaO * Al₂O₃ * 3 CaSO₄ * 32 H₂O bzw. Ca₆[Al(OH)₆]₂(SO₄)₂ * 26 H₂O], und deren Mischungen. Besonders bevorzugt wird es, wenn der aluminiumhaltige Füllstoff ausgewählt ist aus Tetracalciumaluminat-Hydrat, Calciumaluminatsulfat und deren Mischungen.

Im Rahmen der vorliegenden Erfindung wird es besonders bevorzugt, wenn der aluminiumhaltige Füllstoff Calciumaluminiumsulfat [Ettringit, 3 CaO * Al₂O₃ * 3 CaSO₄ * 32 H₂O bzw. Ca₆[Al(OH)₆]₂(SO₄)₂ * 26 H₂O] ist. Die Summenformel wird abweichend von der oben dargestellten Schreibweise mit 26 Kristallwassermolekülen auch gelegentlich mit 24 Kristallwassermolekülen angegeben. Gemeint ist jedoch stets die gleiche Verbindung.

Calciumaluminatsulfat wird in Form wässriger Suspensionen und als Pulver kommerziell vertrieben. Calciumaluminatsulfat ist aus dem Mineral Ettringit aufgebaut und enthält einen Calciumoxidanteil von ca. 13,5 Gew.-%, einen Aluminiumoxidanteil von ca. 8 Gew.-% und ein Kristallwassergehalt von ca. 45 Gew.-%. Calciumaluminatsulfat bzw. Ettringit oder seine wässrige Dispersion, wird unter anderem auch vereinzelt als Weißpigment in Bautenfarben und in der Papierbeschichtung eingesetzt. Calciumaluminatsulfat weist dabei eine hohe Deckkraft sowie ein starkes Absetz- und rasches Trocknungsverhalten auf, so dass es üblicherweise nicht hochkonzentriert eingesetzt werden kann und bereits die Verarbeitung zu den Beschichtungszusammensetzungen problematisch ist. Der Einsatz von Calciumaluminatsulfat ist daher trotz seiner hemmenden Wirkung auf Mikroorganismen stark limitiert. Überraschenderweise hat sich gezeigt, dass gerade Calciumaluminatsulfat auch ein verstärkende Wirkung auf den Dichtstoff ausübt und diesen vor mechanischer Beschädigung schützt. Der Grund für diese Wirkung ist noch nicht geklärt, es wird jedoch vermutet, dass die nadelförmige Ausbildung der Partikel hierfür verantwortlich ist.

Üblicherweise ist es im Rahmen der vorliegenden Erfindung vorgesehen, dass der aluminiumhaltige Füllstoff in Partikelform vorliegt.

Im Allgemeinen weist der aluminiumhaltige Füllstoff eine Korngrößenverteilung D50 im Bereich von 0,5 bis 120µm, insbesondere 0,6 bis 100 µm, vorzugsweise 0,7 bis 80 µm, bevorzugt 0,8 bis 70 µm, auf.

Gemäß einer bevorzugten Ausführungsform weist der aluminiumhaltige Füllstoff eine Korngrößenverteilung D50 im Bereich von 10 bis 120µm, insbesondere 25 bis 100 µm, vorzugsweise 40 bis 80 µm, bevorzugt 50 bis 70 µm, auf. Diese Korngrößenverteilung wird insbesondere bevorzugt, wenn der aluminiumhaltige Füllstoff als Pulver eingesetzt wird.

Im Rahmen der vorliegenden Erfindung kann es gemäß einer weiteren bevorzugten Ausführungsform vorgesehen sein, dass der aluminiumhaltige Füllstoff eine Korngrößenverteilung D10 im Bereich von 0,05 bis 0,5 µm, insbesondere 0,1 bis 0,4 µm, vorzugsweise 0,15 bis 0,3 µm, bevorzugt 0,18 bis 0,25 µm, aufweist.

Gleichermaßen kann es vorgesehen sein, dass der aluminiumhaltige Füllstoff eine Korngrößenverteilung D50 im Bereich von 1,0 bis 4 µm, insbesondere 1,5 bis 3,0 µm, vorzugsweise 1,8 bis 2,7 µm, bevorzugt 2,0 bis 2,5 µm, aufweist.

Gleichfalls kann es vorgesehen sein, dass der aluminiumhaltige Füllstoff eine Korngrößenverteilung D90 im Bereich von 5,0 bis 10 µm, insbesondere 5,5 bis 8,0 µm, vorzugsweise 6,0 bis 7,5 µm, bevorzugt 6,5 bis 7,0 µm, aufweist.

Diese Korngrößenverteilungen werden insbesondere dann bevorzugt, wenn der aluminiumhaltige Füllstoff in Form einer Dispersion zur Herstellung des erfindungsgemäßen Dichtstoffs eingesetzt wird.

Unter den Begriffen D10, D50 und D90 ist jeweils zu verstehen, dass 10 % aller Partikel eine geringere Partikelgröße haben bzw. 50 % aller Partikel oder 90 % aller Partikel. Die Partikelgrößen bzw. die Partikelgrößenverteilung können insbesondere über Laserstreuung ermittelt werden.

Was nun die Menge anbelangt, in welcher der Dichtstoff den aluminiumhaltigen Füllstoff enthalten kann, so kann diese in weiten Bereichen variieren. Es hat sich im Rahmen der vorliegenden Erfindung bewährt, wenn der Dichtstoff den aluminiumhaltigen Füllstoff in Mengen von höchstens 30 Gew.-%, insbesondere höchstens 20 Gew.-%, vorzugsweise höchstens 10 Gew.-%, bevorzugt höchstens 8 Gew.-%, bezogen auf den Feststoffanteil des Dichtstoffs, aufweist.

Gleichermaßen kann es vorgesehen sein, dass der Dichtstoff den aluminiumhaltigen Füllstoff in Mengen von mindestens 1 Gew.-%, insbesondere mindestens 3 Gew.-%, vorzugsweise mindestens 5 Gew.-%, bevorzugt mindestens 6 Gew.-%, bezogen auf den Feststoffanteil des Dichtstoffs, aufweist.

Weiterhin werden besonders gute Ergebnisse erhalten, wenn der Dichtstoff den aluminiumhaltigen Füllstoff in Mengen von 1 bis 30 Gew.-%, insbesondere 3 bis 20 Gew.-%, vorzugsweise 4 bis 10 Gew.-%, bevorzugt 6 bis 8 Gew.-%, bezogen auf den Feststoffanteil des Dichtstoffs, aufweist.

Der aluminiumhaltige Füllstoff kann somit in hoher Konzentration in dem Dichtstoff enthalten sein und auch als alleiniges Pigment bzw. alleiniger Füllstoff eingesetzt werden.

Wie zuvor bereits ausgeführt, weist der Dichtstoff mindestens ein Bindemittel auf. Im Rahmen der vorliegenden Erfindung gewährt, wenn der Dichtstoff ein Bindemittel ausgewählt aus der Gruppe der Silikone, Polyurethane, Acrylate und deren Mischungen aufweist. Vorzugsweise ist das Bindemittel ausgewählt aus der Gruppe von Silikonen, Acrylaten und deren Mischungen. Besonders bevorzugt ist das Bindemittel aus der Gruppe von Silikonen und Acrylaten ausgewählt. Bei den im Rahmen der vorliegenden Erfindung vorzugsweise eingesetzten Bindemitteln handelt sich daher um reaktive Bindemittel. Im Fall von Silikonen handelt es sich um chemisch reaktive Bindemittelsysteme bzw. Dichtstoffe, während Acrylaten physikalisch reaktive Bindemittelsysteme bzw. Stoffe darstellen. Polyurethanen können entweder chemisch reaktiv war oder physikalisch reaktiv sein.

Wenn das Bindemittel ein chemisch reaktives Bindemittel ist, kann es vorgesehen sei, dass das Bindemittel mindestens einen Vernetzer und/oder Härter aufweist. Als Vernetzter bzw. Härter werden insbesondere Verbindungen aus der Gruppe der Alkoxysilane, Aminsilane, Oximsilane, Vinylsilane, Peroxide, Kieselsäureester und deren Mischungen eingesetzt. In diesem Fall ist das Bindemittel ein mehrkomponentiges, insbesondere zweikomponentiges, Systeme aus einer oder mehreren Bindemittelbasen, insbesondere einer Bindemittelbasis, und mindestens einem Vernetzer und/oder Härter. Vorzugsweise handelt es ich bei dem erfindungsgemäßen Dichtstoff jedoch um ein einkomponentiges System, auch wenn ein reaktives Bindemittel verwendet wird.

Im Rahmen der vorliegenden Erfindung ist es üblicherweise vorgesehen, dass der Dichtstoff das Bindemittel in Mengen von 10 bis 95 Gew.-%, insbesondere 12 bis 80 Gew.-%, vorzugsweise 15 bis 60 Gew.-%, bezogen auf den Feststoffanteil des Dichtstoffs, enthält.

Gleichermaßen ist es möglich, dass der Dichtstoff das Bindemittel in Mengen von mindestens 10 Gew.-%, insbesondere mindestens 12 Gew.-%, vorzugsweise mindestens 15 Gew.-%, bezogen auf den Feststoffanteil des Dichtstoffs, enthält.

Darüber hinaus wird gleichfalls besonders gute Ergebnisse erhalten, wenn der Dichtstoff das Bindemittel in Mengen von höchstens 95 Gew.-%, insbesondere höchstens 80 Gew.-%, vorzugsweise höchstens 60 Gew.-%, auch bezogen auf den Feststoffanteil des Dichtstoffs, enthält.

Wenn das Bindemittel einen Vernetzer und/oder Härter aufweist, so hat es sich bewährt, wenn das Bindemitteln den Vernetzer und/oder Härter in Mengen von 1 bis 70 Gew.-%, insbesondere 10 bis 60 Gew.-%, vorzugsweise 40 bis 55 Gew.-%, bezogen auf das Bindemittel, aufweist.

Gemäß einer bevorzugten Ausführungsform der vorliegenden Erfindung weist der Dichtstoff
(a) mindestens einen aluminiumhaltigen Füllstoff, insbesondere in Mengen von 1 bis 30 Gew.-%, und
(b) mindestens ein Bindemittel, insbesondere in Mengen von 10 bis 98 Gew.-%, jeweils bezogen auf den Feststoffanteil des Dichtstoffs, auf.

Für diese besondere und bevorzugte Ausführungsform der vorliegenden Erfindung gelten alle zuvor genannten Parameter, Merkmale, Vorteile und Besonderheiten entsprechend.

Im Rahmen der vorliegenden Erfindung weiterhin vorgesehen sein, dass der Dichtstoff mindestens ein Additiv aufweist.

Wenn der Dichtstoff ein Additiv aufweist, so ist das Additiv üblicherweise ausgewählt aus der Gruppe von Netzmitteln, Dispergiermitteln, Katalysatoren, Rheologiestellmitteln, Verdickern, pH-Stellmitteln, Weichmachern und deren Mischungen.

Für den Fall, dass der Dichtstoff ein Additiv enthält, hat sich bewährt, wenn der Dichtstoff das Additiv in Mengen von 0,1 bis 15 Gew.-%, insbesondere 0,5 bis 10 Gew.-%, vorzugsweise 1 bis 8 Gew.-%, bezogen auf den Feststoffanteil des Dichtstoffs, aufweist.

Gemäß einer bevorzugten Ausführungsform der vorliegenden Erfindung weist der Dichtstoff
(a) mindestens einen aluminiumhaltigen Füllstoff, insbesondere in Mengen von 1 bis 30 Gew.-%,
(b) mindestens ein Bindemittel, insbesondere in Mengen von 10 bis 98 Gew.-%, und
(c) mindestens ein Additiv, insbesondere in Mengen von 0,1 bis 15 Gew.-%, jeweils bezogen auf den Dichtstoff,
auf.

Für diese besonders bevorzugte Ausführungsform der vorliegenden Erfindung gelten alle zuvor genannten Parameter, Merkmale, Vorteile und Besonderheiten entsprechend.

Darüber hinaus ist es im Rahmen der vorliegenden Erfindung vorzugsweise vorgesehen, dass der Dichtstoff mindestens einen weiteren Füllstoff und/oder mindestens ein Pigment aufweist. Durch die weitere Füllstoffe bzw. Pigmente können die Eigenschaften des Dichtstoff sowie seine Farbe gezielt eingestellt werden.

Wenn der Dichtstoff einen weiteren Füllstoff und/oder ein Pigment enthält, so hat es sich bewährt, wenn der Dichtstoff den weiteren Füllstoff und/oder das Pigment in Mengen von 1 bis 70 Gew.-%, insbesondere 5 bis 60 Gew.-%, vorzugsweise 5 bis 50 Gew.-%, bezogen auf den Feststoffanteil des Dichtstoffs, aufweist.

Gleichermaßen kann es im Rahmen der vorliegenden Erfindung vorgesehen sein, dass der Dichtstoff den weiteren Füllstoff und/oder das Pigment in Mengen von mindestens 1 Gew.-%, insbesondere mindestens 5 Gew.-%, bezogen auf den Feststoffanteil des Dichtstoffs, enthält.

Darüber hinaus ist es möglich, dass der Dichtstoff den weiteren Füllstoff und/oder das Pigment in Mengen von höchstens 70 Gew.-%, insbesondere höchstens 60 Gew.-%, vorzugsweise höchstens 50 Gew.-%, bezogen auf den Feststoffanteil des Dichtstoffs, enthält.

Wenn der Dichtstoff neben dem aluminiumhaltigen Füllstoff mindestens einen weiteren Füllstoff und/oder mindestens ein Pigment aufweist, so ist es üblicherweise vorgesehen, dass die Summe aus aluminiumhaltigem Füllstoff und weiterem Füllstoff bzw. Pigment höchstens 80 Gew.-%, insbesondere höchstens 70 Gew.-%, vorzugsweise höchstens 65 Gew.-%, bevorzugt höchstens 60 Gew.-%, bezogen auf den Feststoffanteil des Dichtstoffs, beträgt.

Gleichermaßen kann es vorgesehen sein, dass die Summe aus aluminiumhaltigem Füllstoff und weiterem Füllstoff bzw. Pigment mindestens 2 Gew.-%, insbesondere mindestens 5 Gew.-%, vorzugsweise mindestens 8 Gew.-%, bevorzugt mindestens 10 Gew.-%, bezogen auf den Feststoffanteil des Dichtstoffs, beträgt.

Gemäß einer bevorzugten Ausführungsform der vorliegenden Erfindung ist es vorgesehen, dass der Dichtstoff den aluminiumhaltigen Füllstoff und den weiteren Füllstoff bzw. das Pigment in einer Gesamtmenge von 2 bis 80 Gew.-%, insbesondere 5 bis 70 Gew.-%, vorzugsweise 8 bis 65 Gew.-%, bevorzugt 10 bis 60 Gew.-%, bezogen auf den Feststoffanteil des Dichtstoffs, aufweist.

Wie zuvor ausgeführt, kann es vorgesehen sein, dass der Dichtstoff ein Pigment aufweist.

Üblicherweise ist das Pigment ausgewählt aus der Gruppe von organischen Pigmenten, anorganischen Pigmenten und deren Mischungen.

Im Allgemeinen ist das im Rahmen der vorliegenden Erfindung eingesetzte Pigment ausgewählt aus der Gruppe von organischen und/oder anorganischen Pigmenten, insbesondere Pigmentrußen, Metalloxiden, insbesondere Oxiden von Titan, Zink, Eisen und/oder Cer, sowie deren Mischungen.

Geeignete organische Pigmente umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen. Des Weiteren können die organischen Pigmente beispielsweise ausgewählt sein aus: Carmine, Carbon Black, Anilinschwarz, Azogelb, Chinacridon, Phthalocyaninblau. Beispiele hierfür sind: PY 74, PY 65, PY 110, PR 112, PR 122, PR 254, PR 168, PO 5, PG 7, PB 15:1, PB 15:2, PB 15:3, PB 15:4 und PBk 7.

Geeignete anorganische Pigmente umfassen beispielsweise Metalloxide bzw. andere in Wasser schwerlösliche oder zumindest im Wesentlichen unlösliche Metallverbindungen, insbesondere Oxide von Titan, beispielsweise Titandioxid (CI 77891), Zink, Eisen, beispielsweise rotes und schwarzes Eisenoxid (CI 77491 (rot), 77499 (schwarz)) oder Eisenoxidhydrat (CI 77492, gelb), Zirkonium, Silizium, Mangan, Aluminium, Cer, Chrom sowie Mischoxide der genannten Elemente und deren Mischungen. Weitere geeignete Pigmente sind Bariumsulfat-, Zinksulfid-, Manganviolett-, Ultramarinblau- und Berliner Blau-Pigmente. Die Pigmente können oberflächenmodifiziert sein, wobei die Oberflächen durch die Modifizierung beispielsweise hydrophile, amphiphile oder hydrophobe Verbindungen bzw. Gruppen aufweisen können. Insbesondere können die anorganischen Pigmente PR 101, PY 42, Pb 28, Pb 29, PW 6 und Pbk 33 eingesetzt werden. Die Oberflächenbehandlung kann darin bestehen, dass die Pigmente nach für den Fachmann bekannten Verfahren mit einer dünnen hydrophilen und/oder hydrophoben anorganischen bzw. organischen Schicht versehen werden.

Im Rahmen der vorliegenden Erfindung hat es sich insbesondere bewährt, wenn das Pigment ausgewählt ist aus der Gruppe von Titandioxid, Eisenoxidgelb, Eisenoxidrot, Bismutvanadat, Rußschwarz, Toluidinrot, Phthalocyanin, Phthalocyaninblau, Monoazogelb, Isoindolinongelb, Chinacridon, Benzimidazolon, Diketopyrrolopyrrolrot und deren Mischungen.

Wenn der Dichtstoff einen weiteren Füllstoff enthält, so kann es vorgesehen sein, dass der Füllstoff ausgewählt ist aus der Gruppe von Kieselsäure, Quarz, Talkum, Glimmer, Kreide, Calciumcarbonat, Bariumsulfat, Mikrohohlkugeln und deren Mischungen.

Gemäß einer bevorzugten Ausführungsform der vorliegenden Erfindung weist der Dichtstoff
(a) mindestens einen aluminiumhaltigen Füllstoff, insbesondere in Mengen von 1 bis 30 Gew.-%,
(b) mindestens ein Bindemittel, insbesondere in Mengen von 10 bis 98 Gew.-%,
(c) mindestens ein Additiv, insbesondere in Mengen von 0,1 bis 15 Gew.-%, und
(d) mindestens einen weiteren Füllstoff und/oder mindestens ein Pigment, insbesondere in Mengen von 1 bis 70 Gew.-%, jeweils bezogen auf den Feststoffanteil des Dichtstoffs, auf,
mit der Maßgabe, dass der Dichtstoff den aluminiumhaltigen Füllstoff und den weiteren Füllstoff bzw. das Pigment in einer Gesamtmenge von 2 bis 80 Gew.-%, bezogen auf den Feststoffanteil des Dichtstoffs, aufweist.

Für diese besondere und bevorzugte Ausführungsform der vorliegenden Erfindung gelten alle zuvor genannten Parameter, Merkmale, Vorteile und Besonderheiten entsprechend.

Darüber hinaus Rahmen der vorliegenden Erfindung vorgesehen sein, dass der Dichtstoff mindestens einen Farbstoff enthält.

Wenn Dichtstoff einen Farbstoff enthält, so enthält der Dichtstoff den Farbstoff üblicherweise in Mengen von 0,1 bis 15 Gew.-%, insbesondere 1 bis 10 Gew.-%, vorzugsweise 2 bis 8 Gew.-%, bezogen auf den Feststoffanteil des Dichtstoffs.

Gemäß einer bevorzugten Ausführungsform der vorliegenden Erfindung weist der Dichtstoff
(a) mindestens einen aluminiumhaltigen Füllstoff, insbesondere in Mengen von 1 bis 30 Gew.-%,
(b) mindestens ein Bindemittel, insbesondere in Mengen von 10 bis 98 Gew.-%,
(c) mindestens ein Additiv, insbesondere in Mengen von 0,1 bis 15 Gew.-%,
(d) mindestens einen weiteren Füllstoff und/oder mindestens ein Pigment, insbesondere in Mengen von 1 bis 70 Gew.-%, und
(e) mindestens einen Farbstoff, insbesondere in Mengen von0,1 bis 15 Gew.-%, jeweils bezogen auf den Dichtstoff, auf,
mit der Maßgabe, dass der Dichtstoff den aluminiumhaltigen Füllstoff und den weiteren Füllstoff bzw. das Pigment in einer Gesamtmenge von 2 bis 80 Gew.-%, bezogen auf den Feststoffanteil des Dichtstoffs, aufweist.

Im Rahmen der vorliegenden Erfindung ist es möglich, dass der aluminiumhaltige von Füllstoff eine nicht zu vernachlässigende Restlöslichkeit aufweist.

Im Rahmen der vorliegenden Erfindung kann es insbesondere vorgesehen sein, dass der aluminiumhaltige Füllstoff eine Löslichkeit von weniger als 10 g/l, insbesondere weniger 4 g/l, vorzugsweise weniger als 3 g/l, bevorzugt weniger als 2 g/l, besonders bevorzugt als 1,5 g/l, ganz besonders bevorzugt weniger als 1 g/l, bei 20 °C in Wasser aufweist.

Insbesondere ist es möglich, dass der aluminiumhaltige Füllstoff eine Löslichkeit von mehr als 0,1 g/l, insbesondere mehr als 0,2 g/l, vorzugsweise mehr als 0,3 g/l, bevorzugt mehr als 0,4 g/l, bei 20 °C in Wasser aufweist.

Im Rahmen der vorliegenden Erfindung ist es bevorzugt, wenn der aluminiumhaltige Füllstoff eine Löslichkeit im Bereich von 0,05 bis 10 g/l, insbesondere 0,05 bis 5 g/l, vorzugsweise 0,1 bis 4 g/l, bevorzugt 0,2 bis 3 g/l, besonders bevorzugt 0,2 bis 2 g/l, ganz besonders bevorzugt 0,3 bis 1,5 g/l, insbesondere bevorzugt 0,4 bis 1 g/l, bei 20 °C in Wasser aufweist.

Verbindungen mit den vorgenannten relativ hohen Löslichkeiten, auch Restlöslichkeiten genannt, sind prinzipiell schwer löslich und können in Form von wässrigen Dispersionen, wie beispielsweise acrylathaltigen Dichtstoffen, bereitgestellt werden, wobei auch der Einsatz als Pulver möglich ist. Ein Vorteil der Verwendung von aluminiumhaltigen Feststoffen ist, dass etwaige ausgewaschene Aluminiumionen durch weiters Lösen der aluminiumhaltigen Verbindungen regeneriert werden und die biostatische bzw. fungistatische Wirkung erhalten bleibt, wobei die aluminiumhaltigen Verbindungen so schwerlöslich sind, dass keine signifikante Abnahme an aluminiumhaltiger Verbindung beobachtet wird.

Darüber hinaus kann es vorgesehen sein, dass der Dichtstoff ein Lösemittel oder Wasser enthält.

Wenn der Dichtstoff ein Lösungsmittel enthält, so ist das Lösungsmittel üblicherweise ein organisches Lösungsmittel und vorzugsweise ausgewählt aus der Gruppe von Alkoholen, Ethern, Carbonsäureestern, Ketonen, Amiden und deren Mischungen.

In diesem Zusammenhang kann es insbesondere vorgesehen sein, dass das Lösungsmittel ausgewählt ist aus C₁- bis C₆-Alkoholen, Diethylether, Glycolethern, Essigsäureethylester, Aceton, N,N-Dimethylformamid und deren Mischungen.

Besonders gute Ergebnisse werden im Rahmen der vorliegenden Erfindung erhalten, wenn das Lösungsmittel ausgewählt ist aus Aceton, Essigsäureethylester, Propylenglycolmonomethylether, Propylenglycolmonoethylether, Propylenglycolmonobutylether, Ethylenglycolmonomethylether, Ethylenglycolmonoethylether, Ethylenglycolmonobutylether, Ethanol, 1-Propanol, 2-Propanol, Butanol und deren Mischungen. Besonders bevorzugt wird es dabei, wenn das Lösungsmittel ausgewählt ist aus Ethanol, 2-Propanol und deren Mischungen. Die besten Ergebnisse werden im Rahmen der vorliegenden Erfindung erhalten, wenn das organische Lösungsmittel Ethanol ist.

In diesem Zusammenhang hat es sich bewährt, wenn der Dichtstoff das Lösemittel oder Wasser in Mengen von bis zu 30 Gew.-%, insbesondere bis zu 25 Gew.-%, vorzugsweise bis zu 22 Gew.-%, bevorzugt bis zu 20 Gew.-%, bezogen auf den Dichtstoff, aufweist.

Gleichermaßen kann es vorgesehen sein, dass der Dichtstoff Lösemittel oder Wasser in Mengen von mindestens 5 Gew.-%, insbesondere mindestens 8 Gew.-%, vorzugsweise mindestens 10 Gew.-%, bezogen auf den Dichtstoff, aufweist.

Darüber hinaus kann es im Rahmen der vorliegenden Erfindung auch vorgesehen sein, dass der Dichtstoff Wasser in Mengen 5 bis 30 Gew.-%, insbesondere 5 bis 25 Gew.-%, vorzugsweise 8 bis 22 Gew.-%, bevorzugt 10 bis 20 Gew.-%, bezogen auf den Dichtstoff, aufweist.

Unter einer Dichtstoffzusammensetzung ist im Rahmen der vorliegenden Erfindung, die anwendungsfertige Zusammensetzung zu verstehen, welche neben späteren Feststoffanteil auch flüchtige Bestandteile umfasst, wie beispielsweise Lösemittel oder Wasser.

Im Rahmen der vorliegenden Erfindung ist doch hinaus vorzugsweise vorgesehen, dass der Dichtstoff insbesondere zumindest im Wesentlichen frei ist von Konservierungsstoffen.

Darüber hinaus ist es gleichermaßen bevorzugt, mit der Dichtstoff insbesondere zumindest im Wesentlichen frei ist von Bioziden.

Wie zuvor bereits ausgeführt, liege Dichtstoff üblicherweise in pastöser, hochviskoser Form vor. Üblicherweise ist es vorgesehen, dass der Dichtstoff eine Viskosität nach Brookfield bei 20 °C im Bereich von 10.000 bis 100.000 mPas, insbesondere 10.000 bis 50.000 mPas, vorzugsweise15.000 bis 30.000 mPas, aufweist.

Weiter Gegenstand der vorliegenden Erfindung - gemäß einem **zweiten** Aspekt der vorliegenden Erfindung - ist Verwendung eines vorgenannten Dichtstoff zur Abdichtung von Fugen, insbesondere in Außen-oder Sanitärbereich.

Für weitergehende Einzelheiten zu diesem Erfindungsaspekt kann auf die obigen Ausführungen zu den erfindungsmäßen Dichtstoff verwiesen werden, welche in Bezug auf die erfindungsgemäße Verwendung entsprechend gelten.

Der Gegenstand der vorliegenden Erfindung wird nachfolgend anhand der Ausführungsbeispiele in nicht beschränkender Weise verdeutlicht.

### Ausführungsbeispiele

### 1. Silikonmassen

### 1.1. Vorbereitung und Untersuchung der Proben

Um die pilzhemmende bzw. fungistatische Wirkung der erfindungsgemäßen Zusammensetzung zu demonstrieren, wird in einem Vergleichssystem die Basiszusammensetzung eines reaktiven zweikomponentigen Abformsilikons mit unterschiedlichen Gewichtsanteilen an pulverförmigem Calciumaluminatsulfat versetzt. Das eingesetzte Calciumaluminatsulfat besitzt Korngrößen D50 = 50 bis 70 µm.

Nach gleichmäßiger Dispergierung der Calciumaluminatsulfatpartikel in der Silikonbasiszusammensetzung wird die Silikonbasiszusammensetzung in einem gewichtsbezogenen Verhältnis von 1:1 mit einer Härterkomponente versetzt und gemischt. Der gewichtsbezogene Anteil der Silikonbasiszusammenseetzung wird dabei ohne den Gehalt an Calciumaluminatsulfat berechnet. Die Mengen an Calciumaluminatsulfat in der Silikonbasiszusammensetzung sowie der resultierenden Silikonmischung sind in Tabellen 1 und 2 angegeben.

**Tabelle 1: Menge an Calciumaluminatsulfat in der Silikonbasiszusammensetzung**

| | |
|---|---|
| ER240800 | Basis |
| ER240800.1 | Basis + 10 % Calciumaluminatsulfat |
| ER240800.2 | Basis + 15 % Calciumaluminatsulfat |
| ER240800.3 | Basis + 20 % Calciumaluminatsulfat |

**Tabelle 2: Menge an Calciumaluminatsulfat in der reaktiven Silikonmischung**

| | |
|---|---|
| ER240800 | Standard |
| ER240800.1 | Standard + 5 % Calciumaluminatsulfat |
| ER240800.2 | Standard + 7,5 % Calciumaluminatsulfat |
| ER240800.3 | Standard + 10 % Calciumaluminatsulfat |

Nach Vermischung mit der Härterkomponente wird die reaktive Silikonzusammensetzung zu ca. 2 mm starken Prüfkörpern gegossen. Proben der Prüfkörper werden nachfolgend eingehender auf ihre Widerstandsfähigkeit gegen Pilzwachstum hin untersucht.

Die Proben werden einer Bestimmung der Einwirkung von Mikroorganismen auf Kunststoffe gemäß ISO 846: 2019 unterzogen. Die Proben werden nach 2 unterschiedlichen Verfahren - Methode A und Methode B - untersucht:

### Methode A: Pilzwachstum-Test

Die Proben werden mit einer Sporensuspension verschiedener Pilze beimpft. Die Pilze sind nur mit Hilfe des Probenmaterials als Kohlenstoffquelle in der Lage zu wachsen. Enthalten die Proben keine verwertbaren Nährstoffe, können die Pilze kein Mycel entwickeln und es kommt nicht zur Zerstörung des Kunststoffes. Methode A ist geeignet für die Bewertung der Resistenz der Probe gegenüber Pilzbefall, wenn keine weiteren verwertbaren organischen Materialien zugegen sind.

### Methode B: Bestimmung der fungistatischen Wirkung

Die Proben werden auf einem vollständigen Nährmedium mit Kohlenstoffquelle aufgelegt und mit einer Sporensuspension verschiedener Pilze beimpft. Auch wenn der Kunststoff keine verwertbaren Nährstoffe enthält, können die Pilze die Probe überwachsen und ihre Stoffwechselprodukte können das Material angreifen. Jegliche Hemmung des Pilzwachstums sowohl auf dem Kunststoff sowie auch auf dem Nährmedium (Hemmzone) zeigt eine fungistatische Aktivität des Kunststoffes oder das Vorhandensein einer antifungalen Ausrüstung an. Methode B soll die Situation einer Oberflächenverunreinigung der Probe in der Praxis, wie beispielsweise Schmutz, organische Ablagerungen etc., widerspiegeln.

Die Proben werden sowohl gemäß Methode A als gemäß Methode B jeweils nach 28 Tagen auf etwaigen Pilzbewuchs hin untersucht. Ein Teil der Proben wird darüber hinaus zwei Tage lang in Gegenwart der Sporensuspension bewässert und anschließend 28 Tage bebrütet, ehe auf Pilzwachstum hin untersucht wird. Die Ergebnisse der Untersuchung sind nachfolgend wiedergegeben.

### 1.2 Ergebnisse

### Methode A

Die Muster sind sowohl unbewässert als auch bewässert frei von Pilzwachstum.

### Methode B

Die Probe "ER240800" zeigt sowohl unbewässert als auch bewässert leichtes Pilzwachstum. Die Proben "ER240800.1" und "ER240800.3" zeigen nach 2 Tagen Wässerung leichtes Pilzwachstum. Die weiteren Mustervarianten sind frei von Bewuchs.

Die Ergebnisse der einzelnen Proben sind der nachfolgenden Tabelle 3 aufgeführt, wobei folgender Bewertungsmaßstab angewandt wird:

### Methode A/B

0 kein Wachstum bei mikroskopischer Betrachtung erkennbar
1 leichtes Wachstum, kein Wachstum mit bloßem Auge erkennbar, mikroskopisch gut zu erkennen;
   a weniger als 25% der Probenoberfläche
   b weniger als 50% der Probenoberfläche
   c mehr als 50% der Probenoberfläche
2 leichtes Wachstum, makroskopisch gut zu sehen, maximal 25% der Probenoberfläche bewachsen.
3 mittelmäßiges Wachstum,
   bis zu 50% der Probenoberfläche bewachsen.
4 starkes Wachstum auf über 50% der Probenoberfläche
o^{R} Werden nach der Bebrütung Randeffekte entdeck, sind sie zwar anzugeben,
   bei der Beurteilung des Pilzwachstums aber zu vernachlässigen, solange sie nicht breiter als 5 mm an jeder Seite sind.

**Tabelle 3: Ergebnisse der Bestimmung nach ISO 846: 2019**

| | | **Pilzwachstum nach 28d** | |
|---|---|---|---|
| **Probenbezeichnung** | **Bewässerung** | **Methode A** | **Methode B** |
| | | | |
| **1. ER240800** | 0d | 0 | 2 |
| | 2d | 0 | 2 |
| **2. ER240800.1** | 0d | 0 | 0 |
| | 2d | 0 | 1a |
| **3. ER240800.2** | 0d | 0 | 0 |
| | 2d | 0 | 0 |
| **4.ER240800.3** | 0d | 0 | 0 |
| | 2d | 0 | 2 |

| | | | |
|---|---|---|---|
| 0d = ohne Bewässerung 2d = 2 Tage bewässert | | | |

### 2. Silikondichtmasse

Eine Silikondichtmasse kann insbesondere nach folgender Zusammensetzung formuliert werden:

**Tabelle 4: Zusammensetzung Silikondichtmasse**

| **Komponente** | **Anteil [Gew.-%]** |
|---|---|
| Vulkanisierter Silikonkautschuk | 40-50 |
| Calciumaluminatsulfat | 2,5 - 20 |
| Methyltributylketoximsilan | 4-6 |
| Vinyltributylketoximsilan | 0,5 - 0,8 |
| Katalysator | 0,03 - 0,05 |
| Nano-Calciumcarbonat | 30 - 45 |
| Cer-modifiziertes Zink-Aluminium-Legierungspulver | 0,1 - 0,3 |

Das eingesetzte Calciumaluminatsulfat besitzt Korngrößen D50 = 50 bis 70 µm.

### 3. Acrylatdichtmasse

Eine Acrylatdichtmasse kann insbesondere nach folgender Zusammensetzung formuliert werden:

**Tabelle 5: Zusammensetzung Acrylatdichtmasse**

| **Komponente** | **Anteil [Gew.-%]** |
|---|---|
| Wässrige Acrylatdispersion (50% Feststoffanteil) | 25 - 40 |
| Calciumaluminatsulfatdispersion (63% Feststoffanteil) | 5-30 |
| Polysaccharid | 0,2 - 2 |
| Weichmacher | 4-10 |
| Füllstoffe | 30 - 60 |
| Wasser | 4-6 |

Das eingesetzte Calciumaluminatsulfat besitzt Korngrößen D10 = 0,2 µm, D50 = 0,9 µm und D90 = 3,0 µm.

## Patentansprüche

1. Dichtstoff,
**dadurch gekennzeichnet,**
**dass** der Dichtstoff einen aluminiumhaltigen Füllstoff und ein Bindemittel aufweist.

2. Dichtstoff nach Anspruch 1, **dadurch gekennzeichnet, dass** der aluminiumhaltige Feststoff ausgewählt ist aus der Gruppe von Magnesiumaluminiumphosphaten, Magnesiumaluminiumsilikaten, Calciumaluminiumphosphaten, Calciumaluminiumsilikaten, Calciumaluminat-Hydraten, Calciumaluminatsulfat und deren Mischungen.

3. Dichtstoff nach Anspruch 1 oder 2, **dadurch gekennzeichnet, dass** der aluminiumhaltige Feststoff ausgewählt ist aus der Gruppe von Calciumaluminiumphosphaten, Calciumaluminiumsilikaten, Calciumaluminat-Hydraten, Calciumaluminatsulfat und deren Mischungen, insbesondere Calciumaluminat-Hydraten, Calciumaluminatsulfat und deren Mischungen.

4. Dichtstoff nach einem der vorangehenden Ansprüche, **dadurch gekennzeichnet, dass** der Dichtstoff den aluminiumhaltigen Füllstoff in Mengen von 1 bis 30 Gew.-%, insbesondere 3 bis 20 Gew.-%, vorzugsweise 4 bis 10 Gew.-%, bevorzugt 6 bis 8 Gew.-%, bezogen auf den Feststoffanteil des Dichtstoffs, aufweist.

5. Dichtstoff nach einem der vorangehenden Ansprüche, **dadurch gekennzeichnet, dass** das Bindemittel ausgewählt aus der Gruppe von Silikonen, Polyurethanen, Acrylaten und deren Mischungen.

6. Dichtstoff nach Anspruch 5, **dadurch gekennzeichnet, dass** das Bindemittel ausgewählt ist aus der Gruppe von Silikonen, Acrylaten und deren Mischungen.

7. Dichtstoff nach Anspruch 5 oder 6, **dadurch gekennzeichnet, dass** der Dichtstoff das Bindemittel in Mengen von 10 bis 95 Gew.-%, insbesondere 12 bis 80 Gew.-%, vorzugsweise 15 bis 60 Gew.-%, bezogen auf Feststoffanteil des Dichtstoffs, enthält.

8. Dichtstoff nach einem der vorangehenden Ansprüche, **dadurch gekennzeichnet, dass** der Dichtstoff mindestens ein Additiv aufweist.

9. Dichtstoff nach Anspruch 8, **dadurch gekennzeichnet, dass** das Additiv ausgewählt ist aus der Gruppe von Netzmitteln, Dispergiermitteln, Katalysatoren, Verdickern, pH-Stellmitteln, Weichmachern und deren Mischungen.

10. Dichtstoff nach Anspruch 8 oder 9, **dadurch gekennzeichnet, dass** der Dichtstoff das Additiv in Mengen von 0,1 bis 15 Gew.-%, insbesondere 0,5 bis 12 Gew.-%, vorzugsweise 1 bis 10 Gew.-%, bezogen auf den Dichtstoff, aufweist.

11. Dichtstoff nach einem der vorangehenden Ansprüche, **dadurch gekennzeichnet, dass** die Zusammensetzung mindestens einen weiteren Füllstoff und/oder mindestens ein Pigment aufweist.

12. Dichtstoff nach Anspruch 11, **dadurch gekennzeichnet, dass** der Dichtstoff den weiteren Füllstoff und/oder das Pigment in Mengen von 1 bis 70 Gew.-%, insbesondere 5 bis 60 Gew,-%, vorzugsweise 5 bis 50 Gew.-%, bezogen auf den Dichtstoff, aufweist.

13. Dichtstoff nach Anspruch 11 oder 12, **dadurch gekennzeichnet, dass** der Füllstoff ausgewählt ist aus der Gruppe von Kieselsäure, Quarz, Talkum, Glimmer, Kreide, Calciumcarbonat, Bariumsulfat, Mikrohohlkugeln und deren Mischungen.

14. Dichtstoff nach einem der vorangehenden Ansprüche, **dadurch gekennzeichnet, dass** der Dichtstoff insbesondere zumindest im Wesentlichen frei ist von Konservierungsstoffen, insbesondere Bioziden.

15. Dichtstoff nach einem der vorangehenden Ansprüche, **dadurch gekennzeichnet, dass** der Dichtstoff eine Viskosität nach Brookfield bei 20 °C im Bereich von 10.000 bis 100.000 mPas, insbesondere 10.000 bis 50.000 mPas, vorzugsweise15.000 bis 30.000 mPas, aufweist.

16. Verwendung eines Dichtstoff nach einem der Ansprüche 1 bis 15 zur Abdichtung von Fugen, insbesondere im Außen- oder Sanitärbereich.
